# EUROPEAN PATENT APPLICATION

(11) **EP 2 887 230 A1**
(43) Date of publication of application: **24.06.2015**
(21) Application number: 13006004.9
(22) Date of filing: 23.12.2013
(51) Int. Cl.: G06F 17/30

(54) **The way of making the data available and exchanging it in the internet network**

(71) Applicant: IAI Spólka Akcyjna, 71-064 Szczecin (PL)
(72) Inventor: Baranski, Pawel, 74-230 Mielecin (PL); Basiak, Przemyslaw, 70-781 Szczecin (PL); Fornalski, Pawel, 72-006 Mierzyn (PL); Mulinski, Sebasitian, 70-340 Szczecin (PL); Przygodzki, Sebastian, 72-510 Wolin (PL); Wcislek, Piotr, 72-100 Goleniow (PL)

(57) **Abstract**

The way of making the data available and exchanging it according to the invention transmits, indicated by a user, search parameters via a reservation system launched by the user, to every available database. Next, every database including the data which matches the search criteria transmits the data directly to the user via at least one node aggregating information. Furthermore, each database containing information similar to the query parameters transmits the information directly to the user through at least one node aggregating information. The reservation system favorably includes a URL address which opens a database.

## Description

The subject of this invention is the way of making the data available and exchanging it in the Internet network. The main data type is information from e-commerce contractors.

Several ways of making the data from contractors available and exchanging it in the Internet network are known. The most basic way is aggregating information in one place, for example, on a server in a form of a noticeboard. An offerer places information and it remains in an unchanged form for a certain period of time independently from its validity. The information which is placed that way is often arranged in a way of a database, including links to different Internet websites grouped according to a subject. An example of making data available in this way is a service www.nadmorze.pl. The service contains information about accommodation along with links referring to different websites of particular contractors. Moreover, the service displays information in a form of pictures, videos, advertisements and text data connected with the business area.

Another way of making the data available is sending it to a central data set where the update of transferred information is made every now and again. For keeping the offer updated additional actions of a contractor may be necessary. The actions can include, for example, assigning part of resources only to a transferred information.

Both aforementioned ways of making the data available and exchanging it are in a form of a static database which requires constant updates in order to keep the information valid. Moreover, a user receives only the information which are available in a database or on internet websites to which links from a database redirect, instead of receiving information which is searched. Yet another inconvenience is the necessity of opening new websites from the links provided in a database and afterwards coming back to the initial webpage. This action, when performed repeatedly, prolongs the time spent on searching for particular information increasing the amount of data transferred in the Internet. Not only does it delay the data transmission but also makes the user tired, inter alia, due to various graphic forms of displayed websites. In the before described ways there is no data exchange between contractors about customers planning to use a particular offer. Additionally, in case of the second described earlier form, a contractor making some rooms in a hotel unavailable only due to their reservation may bear the costs if guests do not arrive. It is also impossible to make a reservation personally or via phone if the rooms are made unavailable. The way of making the data available and exchanging it according to the invention is a reservation system. A user launches a reservation system which transfers the user's query parameters to every available database. Afterwards, every database containing information matching this query transmits the data directly to the user via at least one node aggregating information. Moreover, each database containing information similar to the query parameters, transmits the information directly to the user through at least one node aggregating information, and the reservation system favorably includes a URL address which opens a database.

The way of making the data available and exchanging it according to the invention, eliminates adverse phenomena described at the very beginning of this document. In a process of searching for information, a user receives exactly the information, the one is searching for or equivalents. As a result, the user is more likely to achieve the aim, for example, to book a hotel. The user does not need to open different websites in order to find information, or to come back to a main page, as the searched information is provided to the user on a one website, in a more precise form. The amount of data transmitted via the Internet network decreases what quickens user's activities significantly. As a result the user is less tired and the time spent over a task is shorter. Furthermore, the way of making the data available and exchanging it according to the invention allows for the exchange of information between contractors about customers who are planning to use a service, for example, to book a hotel. Also, the problem of blocking reservations which are not finalized, is completely eliminated. According to the invention, the way eliminates as well a problem of invalid offers presented to a user.

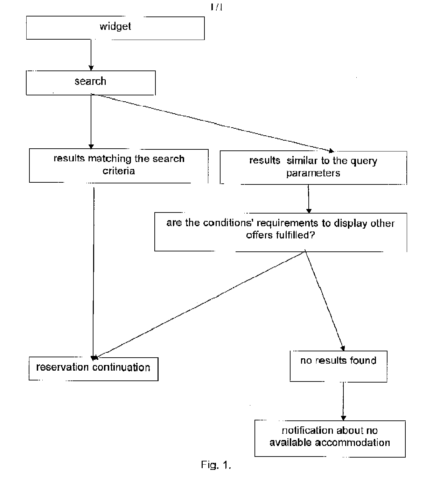

The way of making the data available and exchanging it according to the invention, as a performance example, is presented in the picture where fig.1 describes the way of making the data available and exchanging it in the Internet network, in a form of a scheme.

Exemplary way of making the data available and exchanging it in the network, according to the invention, has been described on the basis of a website for hotel reservations and for offers search. A user opens a website and indicates search parameters, in this case the parameters are a date, a number of guests, a destination and a price per person. It is possible to add more parameters and narrow the search criteria. Afterwards, the user starts off the reservation system which transmits the search parameters to every available database in hotels. Each database which matches the search criteria, for example, the date, the number of guests and the price per person transmits the data directly to the user via at least one node aggregating information. Additionally, each database containing information similar to the query parameters, for example, accommodation in nearby locations within X kilometers of the expected location, price Z greater/less than expected, dates within Y days of selected dates, transmits the information directly to the user through at least one node aggregating information. The reservation system presenting the offer received by the user may include a URL address opening several databases of several hotels or booking services. Only when there is no information about accommodation matching the search criteria is the user informed about no available accommodation for a particular reservation system. An example of such message: "There is no available accommodation within the dates you have selected. Please choose different criteria."

## Claims

1. The way of making the data available and exchanging it **characterized by** a reservation system launched by a user and transmitting, indicated by the user, search parameters to every available database. Afterwards, each database which matches the search criteria transmits the data directly to the user via at least one node aggregating information.

2. The way, according to Ad.1 **characterized by** the process of transmitting the data directly to the user through at least one node aggregating information by each database including information similar to the search parameters.

3. The way, according to Ad.1 **characterized by** the reservation system favorably including a URL address which opens a database.
